# EUROPÄISCHE PATENTANMELDUNG

(11) **EP 4 375 061 A1**
(43) Veröffentlichungstag der Anmeldung: **29.05.2024**
(21) Anmeldenummer: 22209703.2
(22) Anmeldetag: 25.11.2022
(51) Int. Cl.: B32B 7/09, B32B 15/14, B32B 15/08, B32B 15/06

(54) **NEUARTIGER VERBUNDWERKSTOFF**

(71) Anmelder: Hyconnect GmbH, 22457 Hamburg (DE)
(72) Erfinder: Molter, Lars, 20457 Hamburg (DE)
(74) Vertreter: Patentanwälte Olbricht Buchhold Keulertz

(57) **Zusammenfassung**

Gegenstand der Erfindung ist ein Verbundwerkstoff aufweisend mindestens ein Trägermaterial und mindestens ein Lagenmaterial, wobei das Trägermaterial aus einem ersten Werkstoff besteht und das Lagenmaterial aus einem zweiten Werkstoff besteht, der vom ersten Werkstoff verschieden ist, und das Trägermaterial und das Lagenmaterial kraftschlüssig miteinander verbunden sind.

## Beschreibung

Die Erfindung betrifft einen Verbundwerkstoff gemäß dem Oberbegriff von Anspruch 1.

In vielen verschiedenen industriellen Bereichen, wie im Automobilbau, im Flugzeugbau, im Schiffsbau, sind Metalle, insbesondere Stahl und Aluminium, die wichtigsten Werkstoffe. Im Zuge der Anpassung an neue Designs und Gewichtsreduzierung geraten Leichtbaustrukturen immer mehr in den Fokus. Eine besondere Rolle spielen hierbei neben neuen Kunststoffen und Werkstoffen, die faserverstärkten Werkstoffe (FVW).

Eine Herausforderung bei der Verwendung neuer Werkstoffe stellt die Verbindung der klassischen Werkstoffe, wie in metallischen Bauteilen, mit den Leichtbau-Materialien aus faserverstärkten Werkstoffen dar. Das Fügen von unterschiedlichen Werkstoffen, insbesondere, das Fügen von metallischen und nicht metallischen Werkstoffen erfolgt bisher mittels formschlüssiger, kraftschlüssiger Verbindungsmethoden, wie z.B. Nieten, Bolzen, Schrauben, Falzen, etc. oder mittels stoffschlüssiger Verbindungsmethoden, wie z.B. Kleben. Diese Verbindungsmethoden benötigen entweder zusätzliche Konstruktionsdetails und/oder Hilfsstoffe und Hilfsmittel, wie z.B. Kleber, Nieten, etc. Dabei sind die eigentlichen Verbundpartner mechanisch entkoppelt und nur über das Verbindungsmittel gefügt. Hierdurch reduziert sich oft die eigentliche Tragfähigkeit der Fügepartner.

Ein Verbindungselement für Werkstoffe aus unterschiedlichen Werkstoffklassen ist aus EP 3 326 787 A1 bekannt. Das Verbindungselement für einen metallischen Werkstoff in Form von Vollmaterial mit einem nichtmetallischen faserverstärkten Werkstoff, umfasst mindestens eine metallische Faser und mindestens eine nicht metallische Faser, wobei die mindestens eine metallische Faser und die mindestens eine nicht metallische Faser miteinander verbunden sind und ein hybrides Textilgebilde bilden. Das Verbindungselement eignet sich somit zur Verbindung verschiedener Werkstoffe, allerdings nur unter bestimmten Voraussetzungen.

Hauptmerkmale der Erfindung sind im kennzeichnenden Teil von Anspruch 1 angegeben.

Weitere Ausgestaltungen sind Gegenstand der Unteransprüche oder nachfolgend beschrieben.

Verbundwerkstoff aufweisend mindestens ein Trägermaterial und mindestens ein Lagenmaterial, wobei das Trägermaterial aus einem ersten Werkstoff besteht und das Lagenmaterial aus einem zweiten Werkstoff besteht, der vom ersten Werkstoff verschieden ist, und das Trägermaterial und das Lagenmaterial kraftschlüssig miteinander verbunden sind,
dadurch gekennzeichnet, dass
- der erste Werkstoff ausgewählt ist aus Werkstoffen, die sich stoffschlüssig fügen lassen, bevorzugt schweißbar sind,
- der zweite Werkstoff ausgewählt ist aus nichtmetallischen, faserverstärkten Werkstoffen, faserbasierten Werkstoffen, z.B. technischen Textilien, Elastomeren und nichtelastomeren Kunststoffen,
- das Trägermaterial und das Lagenmaterial durch mindestens ein textiles Fügeverfahren kraftschlüssig miteinander verbunden sind, wobei eine oder mehrere Lagen des ersten Werkstoffs mit einer oder mehrerer Lagen des zweiten Werkstoffs überlappen oder eine oder mehrere Lagen des ersten Werkstoffs mit einer oder mehrerer Lagen des zweiten Werkstoffs bedeckt sind und die Lagen im Bereich der Überlappung oder Deckung mit mindestens einem Faden in Höhenrichtung fest miteinander verbunden sind,
- der Verbundwerkstoff mindestens zwei Lagen Trägermaterial und Lagenmaterial aufweist, wovon mindestens eine der Lagen Trägermaterial und mindestens eine der Lagen Lagenmaterial ist.

Das textile Fügeverfahren ist bevorzugt ausgewählt aus Nähen, Sticken, Tuften, Ketteln, Durchwirken und Durchweben. Die Lagen sind durch mindestens ein textiles Fügeverfahren kraftschlüssig miteinander verbunden, es können aber auch Kombinationen von Fügeverfahren, also z.B. Nähen und Durchwirken verwendet werden.

Der erste Werkstoff ist erfindungsgemäß ein reiner Werkstoff oder selbst ein Verbundwerkstoff. Der zweite Werkstoff ist erfindungsgemäß ein reiner Werkstoff oder selbst ein Verbundwerkstoff.

Der erste Werkstoff ist ausgewählt aus Werkstoffen und Verbundwerkstoffen, die sich stoffschlüssig fügen lassen, besonders bevorzugt thermisch fügen lassen: Eine stoffschlüssige Verbindung zeichnet sich dadurch aus, dass die zu verbindenden Bauteile durch atomare oder molekulare Verbindungen miteinander verbunden sind. Stoffschlüssige Verbindungsarten sind insbesondere Kleben, Löten oder Schweißen. Thermomechanische Fügeverfahren, die zu einer stoffschlüssigen Verbindung führen, sind bevorzugt Schweißen und Löten. Der erste Werkstoff kann in Form eines Halbzeugs vorliegen. Als Halbzeug wird ein vorbehandelter Rohling verstanden. Ein Halbzeug im Sinne der Erfindung ist z.B. ein Lochblech oder ein Metallgitter.

Der erfindungsgemäße Verbundwerkstoff stellt einen hybriden Werkstoff dar, der durch die Anteile des ersten Werkstoffs zumindest teilweise lokal fügbar ist.

Der zweite Werkstoff ist ausgewählt aus nichtmetallischen, faserverstärkten Werkstoffen, faserbasierten Werkstoffen, z.B. technischen Textilien, Elastomeren und nichtelastomeren Kunststoffen. Faserbasierte Werkstoffe umfassen auch Werkstoffe aus Verbundfasern/Hybridfasern wie z.B. aluminiumummantelte Basaltfasern, Hybridfasern die durch Beschichtung von Fasern mit Metall entstanden und die für metallische oder keramische Verbundwerkstoffe geeignet sind, Gewebe aus Hybridfasern oder Organobleche, die aus endlosen Verstärkungsfasern und einer Thermoplastmatrix hergestellt sind. Als technisches Textil wird z.B. ein Gewebe oder Gelege mit Glasfasern, Carbonfasern oder Naturfasern für den technischen Gebrauch verstanden. Dieses umfasst z.B. Polyethylenmatten oder Spinnvlies. "Drapfix" und "Draptex Hybrid" sind z.B. Biaxial-Gelege (0°/90°) mit endlosen Verstärkungsfasern aus Hybridgarnen. Diese Hybridgarne entstehen im Spinnprozess, so dass beide Materialien, Glasfaser und Thermoplast, homogen im Garn verteilt sind. Der zweite Werkstoff kann ein Kunststoff wie zum Beispiel ein Thermoplast, bevorzugt Polyamid, oder eine Keramik sein. Ebenso kann der zweite Werkstoff eine Kunststoffplatte oder eine Keramikplatte sein.

Erfindungsgemäß wird als "kraftschlüssige Verbindung" eine Verbindung verstanden, bei der die Bewegung der Bindungspartner durch Haftreibung verhindert wird. Diese Verbindung wird auch als reibschlüssige Verbindung bezeichnet. Beispiele für kraftschlüssige Verbindungen sind Klemmen, Verknoten, Schraubverbindungen oder Presspassungen.

Eine "Deckung" in Sinne der Erfindung bedeutet, dass die Lagen der Werkstoffe deckungsgleich sind und bevorzugt exakt aufeinanderliegen oder sich nur in kleine Bereichen, z.B. Randbereichen nicht überdecken. Deckung bedeutet somit, dass es mindestens eine deckende Lage aus einem Werkstoff gibt, die auf einer anderen Lage Werkstoff liegt und diesen bedeckt.

Unter einem "Faden" im Sinne der Erfindung werden textile Fäden, Rovings, Garn, Zwirn, Metallfäden oder Drähte verstanden, d.h Materialien deren Längenausdehnung deutlich größer ist als ihre Breite. Rovings sind ein Strang parallel liegender Filamente, auch Endlosfasern.

Im Sinne der Erfindung umfasst "in Höhenrichtung fest miteinander verbunden" sowohl eine Verbindung rein in Z-Richtung oder rein gegen die Z-Richtung also 90° von unten nach oben, aber auch schräge Verbindungen, die in einem Winkel z.B. 45°, nach oben und in seitliche Richtung verlaufen.

Der Verbundwerkstoff kann sich in einer Fläche in mindestens eine Ausdehnungsrichtung erstrecken und im Verbundwerkstoff kann in mindestens einer Ausdehnungsrichtung in der Fläche ein Gradient bezüglich der Werkstoffzusammensetzung verlaufen, bevorzugt ein linearer oder radialer Gradient in der Fläche. Eine Fläche kann dabei nicht nur plane Ebene zu verstehen, sondern stellt die Oberfläche eines Werkstücks dar, und kann z.B. zum Rohr gebogen sein, quaderförmig sein, Wellen oder Knicke aufweisen, je nach Form der Oberfläche des Werkstücks.

In einer Ausführungsform kann der Verbundwerkstoff bei Ausführung mit einem Werkstoffgradienten an einer ersten Seite der Ausdehnungsrichtung des Gradienten zu mehr als 50% aus nur einem der Werkstoffe und an einer zweiten Seite dieser Ausdehnungsrichtung zu mehr als 50 % aus dem anderen Werkstoff gebildet. Unter Gradient wird Änderung des Werkstoffanteils bezogen auf einer bestimmten Strecke verstanden. Der Gradient kann richtungsunabhängig sein, d.h. ob von links nach rechts oder rechts nach links; in beides Fällen herrscht ein Gradient gleichen Betrages. Der Gradient kann auch einen radialen Verlauf haben. Ein radialer Gradient kann einen Verlauf von einer Werkstückmitte nach außen aufweisen oder von außen nach innen aufweisen. Bei runden Geometrien verläuft der Gradient z.B. aus der Mitte oder vom Rand. Verbundwerkstoffe mit einem radialen Gradienten können z.B. als lokale Halter in einer größeren Fläche aus anderen Werkstoffen eingesetzt werden.

In einer Ausführungsform sind der erste Werkstoff und der zweite Werkstoff mit Fäden kraftschlüssig durch Nähen miteinander verbunden, wobei
- eine oder mehrere Lagen des ersten Werkstoffs mit einer oder mehrerer Lagen des zweiten Werkstoffs überlappen und im Bereich der Überlappung mit Fäden so durchnäht sind, dass diese in Höhenrichtung fest und schubsteif miteinander verbunden sind oder
- wobei eine oder mehrere Lagen eines ersten Werkstoffs eine oder mehrere Lagen eines zweiten Werkstoffs bedecken und im Bereich der Deckung zumindest teilweise mit Fäden so durchnäht sind, dass die Lagen in Höhenrichtung fest und schubsteif miteinander verbunden sind.

In einer weiteren Ausführungsform des Verbundwerkstoffs
- ist das Lagenmaterial mittels Fäden auf oder durch das Trägermaterial gestickt oder
- das Lagenmaterial ist durch ein Besticken des Trägermaterials mit Fäden gebildet oder
- das Trägermaterial ist durch Ablegen und Besticken des Lagenmaterials mit Fäden gebildet.

Der Verbundwerkstoff kann mindestens zwei Lagen Trägermaterial aufweisen und die Lagen des Trägermaterials können aus mindestens zwei verschiedenen Werkstoffen aus der Gruppe der ersten Werkstoffe bestehen.

Der Verbundwerkstoff kann mindestens zwei Lagen Lagenmaterial aufweisen und die Lagen des Lagenmaterials können aus mindestens zwei verschiedenen Werkstoffen aus der Gruppe der zweiten Werkstoffe bestehen.

In einer Ausführungsform werden als Fäden Drähte, bevorzugt Stahldrähte, Kupferdrähte oder Aluminiumdrähte eingesetzt.

Das Trägermaterial kann eine Metallplatte mit Löchern, ein Gitter, ein Gewebe, ein technisches Textil oder eine Metallfolie sein. Das Trägermaterial kann eine Metallplatte mit Löchern sein, bevorzugt ein metallisches Halbzeug, wie z.B. ein Lochblech. Das Trägermaterial kann ein Gitter ein, bevorzugt ein Metallgitter oder ein Kunststoffgitter. Das Trägermaterial kann ein Gewebe sein, bevorzugt ein Drahtgewebe. Das Trägermaterial kann eine Filamentablage sein, z.B. aus Stahlfilamenten/Stahlfasern.

In einer Ausführungsform ist das Trägermaterial ein metallisches Halbzeug mit Löchern und weist ggf. an mindestens einer Seite eine nicht gelochte Metallkante auf.

Die Trägerlage kann als Lochblech ausgeführt sein. Wenn die Trägerlage als Lochblech ausgeführt ist, können die Stege des Lochblechs eine unterschiedliche Stärke aufweisen, wobei bevorzugt mindestens entlang einer Ausdehnungsrichtung des Lochblechs ein Gradient bezüglich der Stärke der Stege im Lochblech verläuft, d.h. eine kleine Lochung mit breiten Stegen hin zu einer breiten Lochung mit feinen Stegen in unterschiedlichen Lochmustern führt. Das Lochmuster kann mit runden oder vieleckigen Löchern ausgeführt sein. Geeignete Lochformen sind z.B. Kreise, Waben (Sechsecke) und Fünfecke.

In einer weiteren Ausführungsform des Verbundwerkstoffs kann das Trägermaterial ein Drahtgewebe sein und das Lagenmaterial ein Glasfasergelege sein und der Verbundwerkstoff kann mindestens drei Lagen Trägermaterial und mindestens drei Lagen Lagenmaterial aufweisen.

In einer weiteren Ausführungsform kann der Verbundwerkstoff als Rohr oder Röhre geformt sein und der Gradient der Werkstoffzusammensetzung entlang der Längsachse des Rohrs oder der Röhre verlaufen.

Der Verbundwerkstoff kann als Einsatz ausgebildet sein und der Gradient vom Rand des Einsatzes zu einem Bereich im Inneren des Einsatzes, bevorzugt zur Mitte des Einsatzes, radialverlaufen.

Das Verbindungselement kann an mindestens einer Seite oder Seitenfläche nur aus einem Werkstoff bestehen.

Der Verbundwerkstoff kann zusätzlich zum Trägermaterial eine oder mehrere Lagen Textilien aus Fasermaterialien oder anderen Materialien aufweist, die zusammen mit Fasern so versehen werden, dass diese in Höhenrichtung aber auch in allen anderen Richtungen miteinander fest verbunden sind.

Ein Beispiel eines erfindungsgemäßen Verbundwerkstoffs kann als zweiten Werkstoff ein faserbasierter Werkstoff aufweisen. Der faserbasierte Werkstoff kann z.B. ein Glasfasergelege sein, welcher auf das Trägermaterial gestickt wird. Dann kann die bestickte Trägerlage mit Kunststoff verstehen werden, um ein faserverstärkter Werkstoff zu bilden.

Der Verbundwerkstoff kann direkt als Material für Werkstücke, als Verbindungselement oder als Einsatz verwendet werden.

Wenn ein Materialstück des Verbundwerkstoffs als ein Einsatzteil (Insert) verwendet wird, kann es beispielsweise genutzt werden um Verbindungen in einem größeren Bauteil zu schaffen. Es geht dabei um eine lokale Anwendbarkeit. So können zum Beispiel Lastaufnahmepunkte in einem Laminat als Einsatzteile aus dem Verbundwerkstoff ausgestaltet sein.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen Schnitt durch eine Ausführungsform eines erfindungsgemäßen Verbundwerkstoffs,
- Fig. 2: eine schematische Darstellung einer Ausführungsform mit einer Trägerlage mit einem Lochblech,
- Fig. 3: zeigt eine weitere Ausführungsform des Verbundwerkstoffs und
- Fig. 4: zeigt eine weitere Ausführungsform des Verbundwerkstoffs als Rohr.

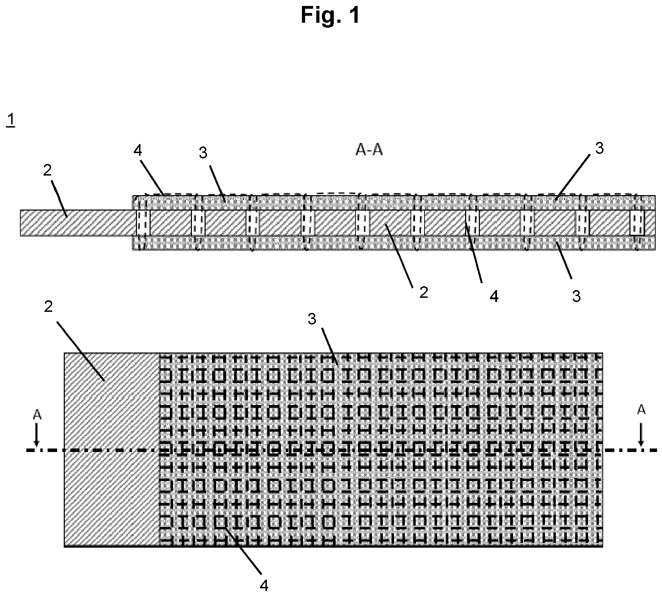

Figur 1 zeigt eine Aufsicht auf und einen Schnitt (A-A) durch eine Ausführungsform eines erfindungsgemäßen Verbundwerkstoffs 1 mit einer Lagen eines Trägermaterials 2 und zwei Lagen eines Lagenmaterials 3. Die Lage des Trägermaterials 2 überlappt mit den Lagen des Lagenmaterials 3.. Das Lagenmaterial 3 ist auf der Oberseite und Unterseite der Lage des Trägermaterials 3 angeordnet. Die Lagen sind mit einem Faden 4 miteinander vernäht.

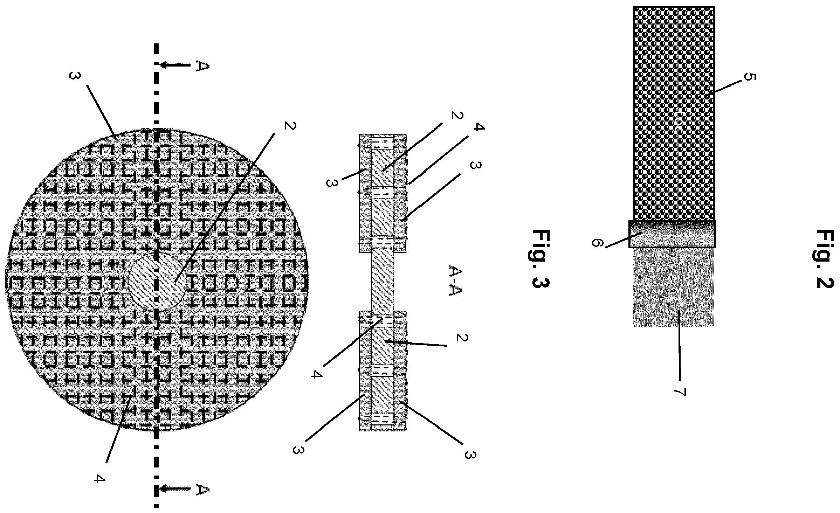

Figur 2 zeigt ein Trägermaterial in einer Ausführung als Lochblech. Figur 2 zeigt eine Aufsicht auf eine schematische Darstellung dieser Ausführungsform. Ein Lochblech 5 ist über einen Lochblechsteg 6 mit einer Metallplatte 7 verbunden. Das Lochblech weist eine reine, nicht gelochte Metallkante auf, die auch als Lochblechsteg bezeichnet wird. Das Lochblech kann zudem einen Gradienten der Lochung aufweisen. Die Metallstege im Blech sind die schwächste Stelle bei der Verbindung. Die Stege können daher auf der Metallseite breiter sein und dann zur Verbundseite schmaler werden.

Figur 3 zeigt eine weitere Ausführungsform des Verbundwerkstoffs in einer Aufsicht und einer Schnittansicht (A-A). Eine Lage Trägermaterial 2 ist als runde Platte ausgeführt. Oberhalb und unterhalb der Platte aus Trägermaterial 2 befindest sich jeweils eine Lage Lagenmaterial 3, dass als Scheibe ausgeführt ist und die Platte teilweise bedeckt, bis auf einen Kreisausschnitt in der Plattenmitte. Die zwei Lagen Lagenmaterial 3 sind über Fäden 4 mit der Lage Trägermaterial 3 vernäht.

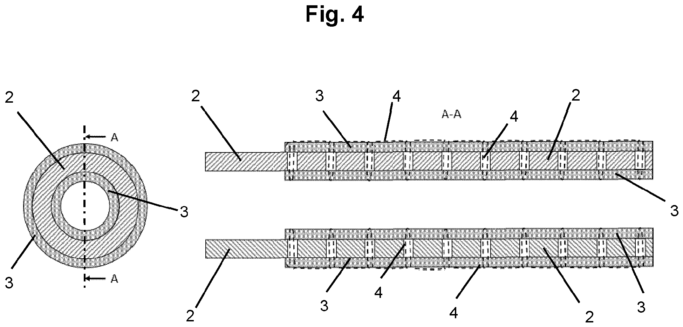

Figur 4 zeigt eine weitere Ausführungsform des Verbundwerkstoffs in einer Ausgestaltung als Rohrförmiges Bauteil in einer schematische Darstellung in Form eines Querschnitts und eines Längsschnitts.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Verbundwerkstoff
- 2: Trägermaterial
- 3: Lagenmaterial
- 4: Faden
- 2a: Kernlage
- 5: Lochblech
- 6: Lochblechsteg
- 7: Metallplatte

## Patentansprüche

1. Verbundwerkstoff aufweisend mindestens ein Trägermaterial und mindestens ein Lagenmaterial, wobei das Trägermaterial aus einem ersten Werkstoff besteht und das Lagenmaterial aus einem zweiten Werkstoff besteht, der vom ersten Werkstoff verschieden ist, und das Trägermaterial und das Lagenmaterial kraftschlüssig miteinander verbunden sind,
**dadurch gekennzeichnet, dass**
- der erste Werkstoff ausgewählt ist aus Werkstoffen, die sich stoffschlüssig fügen lassen, bevorzugt schweißbar sind,
- der zweite Werkstoff ausgewählt ist aus nichtmetallischen, faserverstärkten Werkstoffen, faserbasierten Werkstoffen, Elastomeren und nichtelastomeren Kunststoffen,
- das Trägermaterial und das Lagenmaterial durch mindestens ein textiles Fügeverfahren kraftschlüssig miteinander verbunden sind, wobei eine oder mehrere Lagen des ersten Werkstoffs mit einer oder mehrerer Lagen des zweiten Werkstoffs überlappen oder eine oder mehrere Lagen des ersten Werkstoffs mit einer oder mehrerer Lagen des zweiten Werkstoffs bedeckt sind und die Lagen im Bereich der Überlappung oder Deckung mit mindestens einem Faden in Höhenrichtung fest miteinander verbunden sind,
- der Verbundwerkstoff mindestens zwei Lagen Trägermaterial und Lagenmaterial aufweist, wovon mindestens eine der Lagen Trägermaterial und mindestens eine der Lagen Lagenmaterial ist.

2. Verbundwerkstoff gemäß Patentanspruch 1, **dadurch gekennzeichnet, dass** sich der Verbundwerkstoff in einer Fläche in mindestens eine Ausdehnungsrichtung erstreckt und im Verbundwerkstoff in mindestens einer Ausdehnungsrichtung in der Fläche ein Gradient bezüglich der Werkstoffzusammensetzung verläuft, bevorzugt ein linearer oder radialer Gradient in der Fläche.

3. Verbundwerkstoff gemäß Patentanspruch 1 oder 2, **dadurch gekennzeichnet, dass** das Trägermaterial und das Lagenmaterial durch mindestens ein textiles Fügeverfahren ausgewählt aus Nähen, Sticken, Tuften, Ketteln, Durchwirken und/oder Durchweben, kraftschlüssig miteinander verbunden sind.

4. Verbundwerkstoff gemäß einem der vorhergehenden Patentansprüche **dadurch gekennzeichnet, dass** der erste Werkstoff und der zweite Werkstoff mit Fäden kraftschlüssig durch Nähen miteinander verbunden sind, wobei eine oder mehrere Lagen des ersten Werkstoffs mit einer oder mehrerer Lagen des zweiten Werkstoffs überlappen und im Bereich der Überlappung mit Fäden so durchnäht sind, dass diese in Höhenrichtung fest und schubsteif miteinander verbunden sind oder wobei eine oder mehrere Lagen eines ersten Werkstoffs eine oder mehrere Lagen eines zweiten Werkstoffs bedecken und im Bereich der Deckung zumindest teilweise mit Fäden so durchnäht sind, dass die Lagen in Höhenrichtung fest und schubsteif miteinander verbunden sind.

5. Verbundwerkstoff gemäß Patentanspruch 1 oder 2, **dadurch gekennzeichnet, dass** das Lagenmaterial mittels Fäden auf oder durch das Trägermaterial gestickt ist oder das Lagenmaterial durch ein Besticken des Trägermaterials mit Fäden gebildet ist.

6. Verbundwerkstoff gemäß einem der vorhergehenden Patentansprüche **dadurch gekennzeichnet, dass** der erste Werkstoff ausgewählt ist aus Werkstoffen, die schweißbar sind.

7. Verbundwerkstoff gemäß einem der vorhergehenden Patentansprüche **dadurch gekennzeichnet, dass** der Verbundwerkstoff mindestens zwei Lagen Trägermaterial aufweist und die Lagen aus mindestens zwei verschiedenen Werkstoffen aus der Gruppe der ersten Werkstoffe bestehen.

8. Verbundwerkstoff gemäß einem der vorhergehenden Patentansprüche **dadurch gekennzeichnet, dass** der Verbundwerkstoff mindestens zwei Lagen Lagenmaterial aufweist und die Lagen aus mindestens zwei verschiedenen Werkstoffen aus der Gruppe der zweiten Werkstoffe bestehen.

9. Verbundwerkstoff gemäß einem der vorhergehenden Patentansprüche **dadurch gekennzeichnet, dass dadurch gekennzeichnet, dass** als Fäden Drähte eingesetzt werden.

10. Verbundwerkstoff gemäß einem der vorhergehenden Patentansprüche **dadurch gekennzeichnet, dass** das Trägermaterial eine Metallplatte mit Löchern, ein Gitter, ein Gewebe, ein Textil oder eine Metallfolie ist.

11. Verbundwerkstoff gemäß einem der vorhergehenden Patentansprüche **dadurch gekennzeichnet, dass** das Trägermaterial ein metallisches Halbzeug mit Löchern ist und ggf. an mindestens einer Seite eine nicht gelochte Metallkante aufweist.

12. Verbundwerkstoff gemäß Patentanspruch 10 oder 11 **dadurch gekennzeichnet, dass** die Trägerlage ein Lochblech ist und die Stege des Lochblechs eine unterschiedliche Stärke aufweisen, wobei bevorzugt mindestens entlang einer Ausdehnungsrichtung des Lochblechs ein Gradient bezüglich der Stärke der Stege im Lochblech verläuft.

13. Verbundwerkstoff gemäß einem der Patentansprüche 1 bis 11 **dadurch gekennzeichnet, dass** das Trägermaterial ein Drahtgewebe ist und das Lagenmaterial ein Glasfasergelege ist und der Verbundwerkstoff mindestens drei Lagen Trägermaterial und mindestens drei Lagen Lagenmaterial aufweist.

14. Verbundwerkstoff gemäß einem der vorhergehenden Patentansprüche **dadurch gekennzeichnet, dass** der Verbundwerkstoff als Rohr oder Röhre geformt ist und der Gradient der Werkstoffzusammensetzung entlang der Längsachse des Rohrs oder der Röhre verläuft.

15. Verbundwerkstoff gemäß einem der Patentansprüche 1 bis 13 **dadurch gekennzeichnet, dass** der Verbundwerkstoff als Einsatz ausgebildet ist und der Gradient vom Rand des Einsatzes zu einem Bereich im Inneren des Einsatzes, bevorzugt zur Mitte des Einsatzes, radialverläuft.

16. Verbindungselement bestehend aus einem Verbundwerkstoff gemäß einem der vorhergehenden Patentansprüche, **dadurch gekennzeichnet, dass** das Verbindungselement an mindestens einer Seite oder Seitenfläche nur aus einem Werkstoff besteht.
